# EUROPÄISCHE PATENTSCHRIFT

(11) **EP 1 515 876 B1**
(45) Veröffentlichungstag und Bekanntmachung des Hinweises auf die Patenterteilung: **03.05.2006**
(21) Anmeldenummer: 03718599.8
(22) Anmeldetag: 14.02.2003
(51) Int. Cl.: B60R 21/01

(54) **SCHUTZVORRICHTUNG**
PROTECTION DEVICE
DISPOSITIF DE PROTECTION

(30) Priorität: 13.06.2002 DE 10226255
(43) Veröffentlichungstag der Anmeldung: 23.03.2005
(73) Patentinhaber: ROBERT BOSCH GMBH, 70442 Stuttgart (DE)
(72) Erfinder: MATTES, Bernhard, 74343 Sachsenheim (DE)
(86) Internationale Anmeldenummer: PCT/DE2003/000450
(87) Internationale Veröffentlichungsnummer: WO 2003/106224

(56) Entgegenhaltungen:
- DE-A- 19 856 129
- GB-A- 2 289 563

## Beschreibung

### Stand der Technik

Die Erfindung geht aus von einer Schutzvorrichtung für eine schwangere Person in einem Fahrzeug nach der Gattung des unabhängigen Patentanspruchs.

Aus DE 19856129A1, die dem Oberbegriff des Anspruchs 1 entspricht, ist es bereits bekannt aus Bilddaten eine schwangere Frau zu erkennen, bei der dann der Gurtstraffer-Systeme in ihrer Wirkung zurückgenommen werden und statt dessen der Airbag vornehmlich betätigt wird.

### Vorteile der Erfindung

Die erfindungsgemäße Schutzvorrichtung für eine schwangere Frau in einem Fahrzeug mit den Merkmalen des unabhängigen Patentanspruchs hat den Vorteil, dass für die schwangere Frau bei einem Unfall die in der nachfolgend beschriebenen Weise eingeschteten Rückhaltemittel in einem Fahrzeug derart angesteuert werden, dass das Verletzungsrisiko für die Frau und das ungeborene Kind minimiert werden.

Erfindungsgemäß wird vorgeschlagen, dass erste Rückhaltemittel bei der Erkennung einer schwangeren Frau bei einem Unfall abgeschaltet werden, um das Verletzungsrisiko für das ungeborene Kind insbesondere zu minimieren, und dass zweite Rückhaltemittel in ihrer Kraftentfaltung reduziert werden, so dass sogenannte weiche Airbags eingesetzt werden, und dass dritte Rückhaltemittel vorhanden sind, die situationsgemäß einsetzbar sind. Dazu zählen solche Rückhaltemittel, die insbesondere der schwangeren Frau bei einem Unfall und in Abhängigkeit von der Art des Unfalls und ihrer physischen Situation einen optimalen Schutz bieten.

Durch die in den abhängigen Ansprüchen aufgeführten Maßnahmen und Weiterbildungen sind vorteilhafte Verbesserungen der im unabhängigen Patentanspruch angegebenen Schutzvorrichtung für eine schwangere Person in einem Fahrzeug möglich.

Weiterhin ist es von Vorteil, dass die ersten Rückhaltemittel derart ausgebildet sind, dass eine Gurtblockierung und eine Gurtstraffung bei einem Front- und/oder Seiten- und/oder Heckaufprall abgeschaltet werden. Bei Front-, Heck- und Seitencrashes können nämlich Verletzungen bzw. kann es zu einer Tötung des Ungeborenen durch eine Krafteinwirkung des Beckengurts und teilweise auch des Schultergurts sowie auch des Lenkradkranzes auf den Unterleib der Mutter kommen. Weiterhin ist es von Vorteil, dass die ersten Rückhaltemittel beim Überrollvorgang die Gurtblockierung ausschalten und den Beckengurt mit einem Leistungsgurtstraffer straffen, wenn ein vorgegebener Rollwinkel erreicht ist. Dieser Rollwinkel ist vorzugsweise bei 50 Grad. Dies vermeidet die Krafteinwirkung auf das ungeborene Kind und sichert gleichzeitig die schwangere Frau.

Die zweiten Rückhaltemittel sind in vorteilhafter Weise derart konfiguriert, dass sie frühzeitig und mit geringer Kraftentfaltung als ein sogenannter weicher Airbag einsetzbar sind, was im Gegensatz zu dem Einsatz zu einer nicht schwangeren Person zu sehen ist. Solche weichen Airbags können auch an den Rücklehnen der Vordersitze für hinten sitzende Schwangere eingesetzt werden. Ein weiterer Schutz kann eventuell durch inflatable carpets' für vorne sitzende werdende Mütter erfolgen.

Weiterhin ist es von Vorteil, dass die dritten Rückhaltemittel einen Kniebag zur Vermeidung des Durchrutschens der schwangeren Person durch den Gurt aufweisen und/oder eine Vorrichtung zum Zurückziehen des Lenkrades und/oder einen Airbag zur Abpolsterung des Lenkrades aufweisen.

Weiterhin ist es von Vorteil, dass eine Anzeige derart konfiguriert ist, dass die Erkennung der schwangeren Person anzeigbar ist. Damit ist insbesondere die Überprüfung der erfindungsgemäßen Schutzvorrichtung möglich.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung und
- Figur 2: eine beispielhafte Ausführung für die Abschaltung der Gurtblockierendstufen.

### Beschreibung

Untersuchungen haben ergeben, dass für Ungeborene in den USA die häufigste Todesursache Kraftfahrzeug-Unfälle sind. Für einen Fötus ist nicht nur das selbe Crashrisiko wie für die schwangere Mutter vorhanden, sondern ein viel größeres Verletzungsrisiko, so dass erfindungsgemäß eine Schutzvorrichtung vorgesehen ist, die insbesondere für das ungeborene Kind bei einem Unfall einen optimalen Schutz bieten soll.

Erste Voraussetzung für den Ungeborenenschutz ist ein Sensor zur Erkennung von Frauen, die sich in einem fortgeschrittenen Schwangerschaftsstadium befinden. Solch ein Sensor kann beispielsweise die Atem- und die Herzfrequenzen messen. Da bei einer werdenden Mutter nur eine Atmung, aber zwei Herzschläge zu messen sind, ist damit eine Erkennung einer schwangeren Frau möglich. Vorzugsweise wird dafür ein Schwingungsaufnehmer, beispielsweise ein piezoelektrischer Schwingungsaufnehmer verwendet.

Bei Frontal-, Heck- und Seitencrashes entstehen Verletzungen bzw. fatale Unfälle von Ungeborenen durch die Krafteinwirkung des Beckengurts und teilweise auch des Schultergurts sowie des Lenkradkranzes auf den Unterleib der Mutter.

Wird nun erfindungsgemäß eine schwangere Frau erkannt, dürfen bei Frontal-, Heck- und Seitencrashes keine Gurtblockierung und keine Gurtstraffung erfolgen. Der Submarining-Effekt, also das Durchrutschen durch den Gurt, muss durch Auslösung von Kniebags und frühzeitig ausgelösten, wenig aggressiven, d.h. weichen Airbags, auch an den Rückenlehnen der Vordersitze für hinten sitzende Schwangere, verhindert werden. Ein erweiterter Schutz kann gegebenenfalls auch durch sogenannte ,inflatable carpets' für vorne sitzende werdende Mütter erfolgen.

Für das Fahrzeug lenkende Schwangere muss zusätzlich das Lenkrad nach vorne weggezogen werden, vorzugsweise durch einen pyrotechnischen Aktuator, um mehr Freiraum zwischen der Mutter und den harten Lenkradteilen zu bekommen. Zusätzlich kann ein entsprechend geformter Airbag die Lenkradfläche mit Lenkradkranz weich abpolstern.

Im Falle eines Überrollvorganges sollte auch die Gurtblockierung ausgeschaltet, jedoch der Beckengurt am Besten mit einem Leistungsgurtstraffer gestrafft werden, nachdem das Fahrzeug den Stabilitätsrollwinkel von ca. 50 Grad erreicht hat und die Schwangere sich etwas aus dem Sitz herausgehoben hat. Damit soll das Kopfanschlagen der schwangeren Frau ans Dach bei dem sich überrollenden Fahrzeug verhindert werden. Der Beckengurt drückt dann gegen die Oberschenkel der Frau und nicht gegen den Unterleib.

Die Gurtblockierung wird heute meist mit einem mechanischen Sensor im Gurtaufroller vorgenommen, der direkt in den Verriegelungsmechanismus eingreift. Solche Sensoren sind beim Schutz ungeborenen Lebens nicht mehr verwendbar.

Es gibt auch elektronische Neigungs- und Lagesensoren, wobei das Messprinzip der magnetischen Flussänderung mit einem Magnet-Hall-System oder mit einem optischen System ist. Ein derartiger Sensor könnte zentral im Fahrzeug zur elektrischen Ansteuerung aller Gurtblockierer verwendet werden. Bei festgestellter Präsenz einer schwangeren Frau bleibt die Blockierung des entsprechenden Gurtes grundsätzlich aus.

Die Auslösung der Airbags bzw. Nichtauslösung der Gurtstraffer bei Längs- und Queraufprallen, die Auslösung des Beckengurtstrafferes bei Überschlägen erfolgt mit dem bereits vorhandenen Airbagauslösegerät mit an die Bedürfnisse des optimalen Schwangerenschutzes angepassten Auslöseschwellen. Diese werden auch zeitabhängig verändert. Dasselbe gilt für die Aktivierung des Lenkradwegziehens.

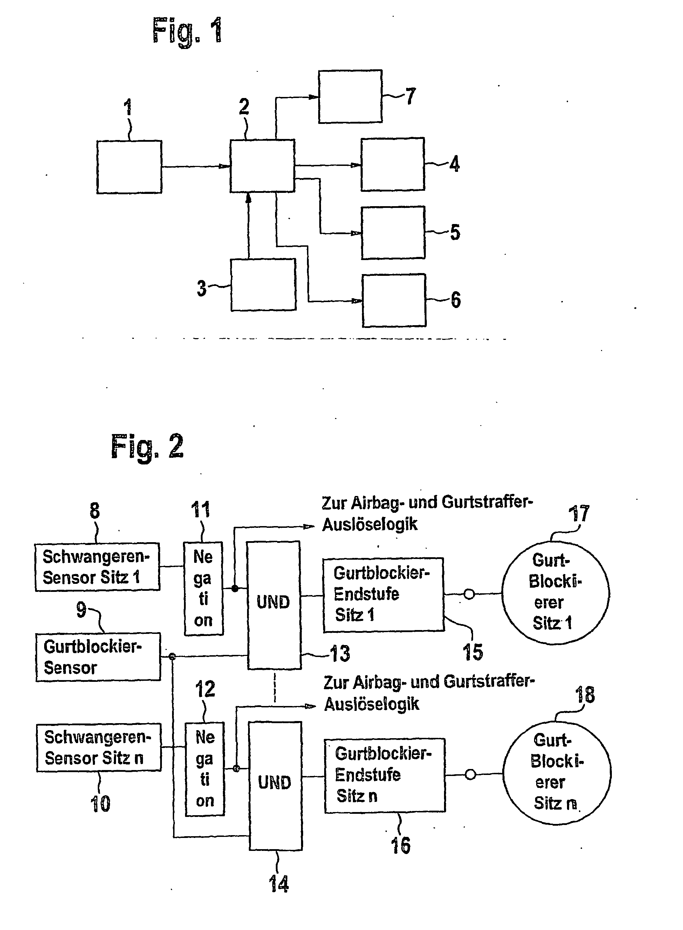

Figur 1 zeigt als Blockschaltbild die erfindungsgemäße Schutzvorrichtung. Ein Sensor 1 zur Detektion der schwangeren Frau ist mit einem Prozessor 2 im Airbagsteuergerät verbunden. Der Sensor 1 ist hier über eine Zweidrahtleitung mit dem Prozessor 2 verbunden. D.h. es werden nur Daten vom Sensor 1 zum Prozessor 2 übertragen. Alternativ ist es möglich, dass eine Busverbindung zwischen dem Sensor 1 und dem Prozessor 2 vorgesehen ist. Auch eine einfach bidirektionale Übertragungsverbindung kann hier vorgesehen sein. Bei dem Sensor 1 handelt es sich hier um einen Schwingungsaufnehmer, der nach dem piezoelektrischen Prinzip funktioniert. Er ist damit in der Lage, die Pulsfrequenz und auch die Atmungsfrequenz von Personen im Fahrgastraum zu detektieren. Dabei ist der Sensor 1 so angeordnet, dass er lediglich die Puls- und Atmungsfrequenz der Person, die auf einem jeweiligen Sitz sitzt, aufnimmt. Ist eine schwangere Person auf dem Sitz, dann detektiert der Sensor lediglich eine Atmungsfrequenz, aber wenigstens zwei Pulsschläge. Der Pulsschlag des Kindes wird über dem der Mutter liegen. Damit ist dann eine Detektion einer schwangeren Person möglich.

Der Prozessor 2 ist über einen ersten Datenausgang mit ersten Rückhaltemitteln 4 verbunden. Das sind Rückhaltemittel, die in Abhängigkeit vom Signal des Sensors 1 in ihrer Funktion abschaltbar sind. Dazu gehören Gurtstraffer und Airbags. Über einen zweiten Datenausgang ist der Prozessor 2 mit zweiten Rückhaltemitteln 5 verbunden, die in ihrer Kraftentfaltung in Abhängigkeit vom Signal des Sensors 1 reduzierbar sind. Dazu gehören insbesondere Airbags, die dann frühzeitig aber mit weniger Intensität bei einem Unfall gezündet werden. Frühzeitig heißt hier, dass der Airbag früher gezündet wird, als bei einer normalen Person, die zu schützen ist. Unter normaler Person wird hier eine nicht schwangere Person verstanden. Weicher Airbag heißt, dass die Geschwindigkeit, mit der der Airbag aufgeblasen wird und die Geschwindigkeit und der Massenfluss, mit denen das Gas in den Airbag geleitet werden, reduziert werden. Damit wird dann das Verletzungsrisiko durch den Airbag minimiert. Über einen dritten Datenausgang ist der Prozessor 2 mit dritten Rückhaltemitteln 6 verbunden. Hier handelt es sich um Rückhaltemittel 6, die insbesondere beim Schutz einer Schwangeren eingesetzt werden. Dazu zählt ein Kniebag, der das Durchrutschen der Person durch den Gurt verhindern soll. Weiterhin ist unter den Rückhaltemitteln 6 zu verstehen, dass eine Vorrichtung zum Zurückziehen des Lenkrads vorhanden ist. Diese Vorrichtung, die pyrotechnisch ausgeführt ist, wird bei einem Unfall eingesetzt, wenn die schwangere Frau als Fahrer auftritt. Damit werden Verletzungen durch ein Aufprallen auf das Lenkrad der schwangeren Frau minimiert. Zusätzlich ist unter den Rückhaltemitteln 6 ein Airbag für den Lenkradkranz zu verstehen, der bei einem Unfall ausgelöst wird, um das Lenkrad abzupolstern. Damit wird bei einer Berührung der schwangeren Person mit dem Lenkradkranz eine Verletzung minimiert. Weiterhin ist der Prozessor 2 mit einer Anzeige 7 verbunden, die anzeigt, dass auf einem jeweiligen Sitz eine schwangere Person erkannt wurde. Alternativ ist es möglich, dass die Anzeige lediglich anzeigt, dass überhaupt eine schwangere Person erkannt wurde. Der Prozessor 2 im Airbagsteuergerät ist weiterhin mit einer Sensorik 3 über einen zweiten Dateneingang verbunden, mit der der Prozessor 2 angezeigt bekommt, ob ein Unfall bevorsteht, beispielsweise mittels einer Precrashsensorik, und/oder dass ein Aufprall stattgefunden hat. Dazu werden Aufprallsensoren verwendet, die beispielsweise als Beschleunigungssensoren ausgebildet sind. Solche Aufprallensoren können innerhalb des Airbagsteuergeräts, das vorzugsweise zentral am Fahrzeug angeordnet ist, angeordnet sein, oder ausgelagert von diesem Steuergerät. Bei solchen Sensoren handelt es sich dann um sogenannte peripheren Sensoren, die verteilt im Fahrzeug angeordnet sind. Solche Sensoren können beispielsweise in der Fahrzeugfront als sogenannte Upfrontsensoren eingesetzt werden. In den Fahrzeugseiten können anstatt von Beschleunigungssensoren auch Druck- oder Temperatur oder andere Verformungssensoren als ausgelagerte Sensoren dienen.

Figur 2 zeigt in einem beispielhaften Blockschaltbild, wie eine Blockierung der Gurte in Abhängigkeit von dem Signal eines Sensors für die schwangere Frau abgeschaltet werden kann. Ein Sensor 8 zur Erkennung einer schwangeren Frau ist mit einem Negationsglied 11 verbunden. Das Negationsglied 11 ist an ein UND-Gatter 13 angeschlossen. An einen zweiten Eingang des UND-Gatters 13 ist ein Gurtblockiersensor 9 angeschlossen, der anzeigt, dass die Gurte blockiert werden sollen, um eine zu schützende Person mit einer Rückhaltekraft zurückzuhalten. Das negierte Signal des Schwangerschaftssensors 8 wird weiterhin zur Airbag- und Gurtstrafferauslöselogik übertragen, um auch hier die entsprechenden Maßnahmen, die oben vorgestellt wurden, einzuleiten, beispielsweise einen weichen Airbag zu zünden, zusätzliche Kniebags zu zünden oder bei einem Überrollvorgang den Beckengurt mit einem Leistungsstraffer anzuziehen.

Wird nun eine schwangere Person mit dem Sensor 8 erkannt, dann gibt das UND-Gatter 13 bei einem Unfall, bei dem der Blockiersensor 9 eine logische 1 abgibt, eine logische 0 ab. Damit wird die Gurtblockierendstufe 15 für den Sitz, auf dem die schwangere Person erkannt wurde, nicht aktiviert. Die Gurtblockierendstufe 15 ist nämlich am Ausgang des UND-Gatters 13 angeschlossen. Die Gurtblockierendstufe 15 ist wiederum mit dem Gurtblockierer 17 für diesen Sitz verbunden. Demnach wird die Gurtblockierendstufe 15 nur angesteuert, wenn das UND-Gatter 13 eine logische 1 abgibt. Das UND-Gatter gibt jedoch nur eine logische 1 ab, wenn der Sensor 8 eine logische 0 erzeugt und der Gurtblockiersensor 9 eine logische 1, also, wenn ein Unfall erkannt wird.

Der Gurtblockiersensor 9 ist weiterhin mit einem UND-Gatter 14 verbunden, das für einen weiteren Sitz vorhanden ist. Auch für diesen Sitz ist ein Sensor 10 zur Erkennung einer schwangeren Person vorhanden, der mit einem Negationsgatter 12 verbunden ist. Die Negation 12 ist an den zweiten Dateneingang des UND-Gatters 14 angeschlossen. Der Ausgang des Negationsgatters 12 ist weiterhin mit der Airbag- und Gurtstrafferauslöselogik verbunden, um hier die zweiten und dritten Rückhaltemittel entsprechend zu aktivieren. Das UND-Gatter 14 ist über seinen Ausgang mit der Gurtblockierendstufe 16 verbunden, die wiederum mit dem Gurtblockierer für den Sitz 18 verbunden ist. Damit ist klar, dass der Gurtblockiersensor 9 mit allen Gurtblockierendstufen für die jeweiligen Sitze verbunden ist. Für jeden Sitz ist jedoch ein eigener Sensor 8 und 10 vorgesehen, der zur Erkennung der schwangeren Person dient.

## Patentansprüche

1. Schutzvorrichtung für eine schwangere Person in einem Fahrzeug, umfassend einen Sensor (1, 8, 10) zur Erkennung der schwangeren Person und Rückhaltemittel (4 bis 6), die derart ansteuerbar sind, dass die Rückhaltemittel (4 bis 6) in ihrer Einsetzbarkeit in Abhängigkeit von einem Signal des Sensors (1, 8, 10) beeinflussbar sind, **dadurch gekennzeichnet, dass** die Schutzvorrichtung erste Rückhaltemittel (4), die bei einem Unfall abschaltbar sind, zweite Rückhaltemittel (5), die in ihrer Kraftentfaltung reduzierbar sind und dritte Rückhaltemittel (6), die situationsgemäß einsetzbar sind, aufweist.

2. Schutzvorrichtung nach Anspruch 1, **dadurch gekennzeichnet, dass** die ersten Rückhaltemittel (4) derart ausgebildet sind, dass sie eine Gurtblockierung und eine Gurtstraffung bei einem Front- und/oder Seiten- und/oder Heckaufprall abschalten.

3. Schutzvorrichtung nach Anspruch 1 oder 2, **dadurch gekennzeichnet, dass** die ersten Rückhaltemittel (4) bei einem Überrollvorgang die Gurtblockierung ausschalten und den Beckengurt mit einem Leistungsgurtstraffer straffen, wenn ein vorgegebener Rollwinkel erreicht ist.

4. Schutzvorrichtung nach Anspruch 3, **dadurch gekennzeichnet, dass** der vorgegebene Rollwinkel ungefähr 50 Grad beträgt.

5. Schutzvorrichtung nach Anspruch 1, **dadurch gekennzeichnet, dass** die zweiten Rückhaltemittel (5) derart konfiguriert sind, dass die zweiten Rückhaltemittel (5) frühzeitig und mit geringerer Kraftentfaltung einsetzbar sind, als bei einer nicht schwangeren Person.

6. Schutzvorrichtung nach Anspruch 1, **dadurch gekennzeichnet, dass** die dritten Rückhaltemittel (6) einen Kniebag zur Vermeidung des Durchrutschens der Person durch den Gurt und/oder eine Vorrichtung zum Zurückziehen des Lenkrads und/oder einen Airbag zur Abpolsterung des Lenkrads aufweisen.

7. Schutzvorrichtung nach einem der vorhergehenden Ansprüche, **dadurch gekennzeichnet, dass** eine Anzeige (7) derart konfiguriert ist, dass die Erkennung der schwangeren Person anzeigbar ist.

## Revendications

1. Dispositif de protection pour une personne enceinte dans un véhicule, comprenant un capteur (1, 8, 10) de reconnaissance de la personne enceinte et des moyens de retenue (4 à 6) pouvant être commandés de telle sorte que l'utilisation des moyens de retenue (4 à 6) peut être influencée en fonction d'un signal du capteur (1, 8, 10),
**caractérisé en ce que**
le dispositif de protection présente des premiers moyens de retenue (4) pouvant être désactivés en cas d'accident, des deuxièmes moyens de retenue (5) dont le déploiement de force peut être réduit et des troisièmes moyens de retenue (6) utilisables en fonction de la situation.

2. Dispositif de protection selon la revendication 1,
**caractérisé en ce que**
les premiers moyens de retenue (4) sont configurés pour désactiver un blocage de la ceinture et une tension de la ceinture lors d'une collision frontale et/ ou latérale et/ ou arrière.

3. Dispositif de protection selon la revendication 1 ou 2,
**caractérisé en ce que**
les premiers moyens de retenue (4) désactivent le blocage de la ceinture en cas de renversement et tendent la ceinture au niveau du bassin à l'aide d'un tenseur de ceinture lorsque l'on atteint un angle de renversement prédéterminé.

4. Dispositif de protection selon la revendication 3,
**caractérisé en ce que**
l'angle de renversement prédéterminé est approximativement égal à 50 degrés.

5. Dispositif de protection selon la revendication 1,
**caractérisé en ce que**
les deuxièmes moyens de retenue (5) sont configurés pour être utilisés plus tôt et avec un déploiement de force plus faible que pour une personne non enceinte.

6. Dispositif de protection selon la revendication 1,
**caractérisé en ce que**
les troisièmes moyens de retenue (6) présentent au niveau des genoux un coussin permettant d'éviter que la personne ne glisse à travers la ceinture et/ou un dispositif pour rétracter le volant et/ou un coussin gonflable pour capitonner le volant.

7. Dispositif de protection selon l'une des revendications précédentes,
**caractérisé en ce qu'**
un affichage (7) est prévu pour afficher la reconnaissance de la personne enceinte.

## Claims

1. Protection device for a pregnant person in a vehicle, comprising a sensor (1, 8, 10) for detecting the pregnant person and restraining means (4 to 6) which can be actuated in such a way that the usability of said restraining means (4 to 6) can be influenced as a function of a signal of the sensor (1, 8, 10), **characterized in that** the protection device has first restraining means (4) which can be switched off in the case of an accident, second restraining means (5) whose generation of force can be reduced, and third restraining means (6) which can be used in accordance with the situation.

2. Protection device according to Claim 1, **characterized in that** the first restraining means (4) are embodied in such a way that they switch off a seatbelt locking means and a seatbelt pre-tensioning means in the event of a front impact and/or side impact and/or rear impact.

3. Protection device according to Claim 1 or 2, **characterized in that** the first restraining means (4) switch off the seatbelt locking means in the event of a rollover process and pre-tension the lap seatbelt with a powered seatbelt pre-tensioner if a predefined roll angle is reached.

4. Protection device according to Claim 3, **characterized in that** the predefined roll angle is approximately 50 degrees.

5. Protection device according to Claim 1, **characterized in that** the second restraining means 5 are configured in such a way that the second restraining means (5) can be used early and with a smaller generation of force than in the case of a person who is not pregnant.

6. Protection device according to Claim 1, **characterized in that** the third restraining means (6) have a knee bag for avoiding the person slipping through the seatbelt and/or a device for retracting the steering wheel and/or an airbag for upholstering the steering wheel.

7. Protection device according to one of the preceding claims, **characterized in that** a display (7) is configured in such a way that the detection of the pregnant person can be displayed.
